# EUROPEAN PATENT APPLICATION

(11) **EP 4 234 498 A1**
(43) Date of publication of application: **30.08.2023**
(21) Application number: 21884934.7
(22) Date of filing: 13.10.2021
(51) Int. Cl.: C01G 53/00, H01M 4/505

(54) **DOPED HIGH-NICKEL TERNARY MATERIAL AND PREPARATION METHOD THEREFOR**

(30) Priority: 26.10.2020 CN 202011156854
(71) Applicant: Guangdong Brunp Recycling Technology Co., Ltd, Foshan, Guangdong 528137 (CN); Hunan Brunp Recycling Technology Co., Ltd., Changsha, Hunan 410600 (CN); Hunan Brunp EV Recycling Co., Ltd., Changsha, Hunan 410600 (CN)
(72) Inventor: DU, Shaolin, Foshan, Guangdong 528137 (CN); YU, Haijun, Foshan, Guangdong 528137 (CN); XIE, Yinghao, Foshan, Guangdong 528137 (CN); ZHANG, Xuemei, Foshan, Guangdong 528137 (CN); MING, Banglai, Foshan, Guangdong 528137 (CN); HOU, Peng, Foshan, Guangdong 528137 (CN)
(74) Representative: Meyer, Thorsten
(86) International application number: PCT/CN2021/123411
(87) International publication number: WO 2022/089205

(57) **Abstract**

The present disclosure belongs to the field of battery materials and discloses a doped nickel-rich ternary material and a preparation method thereof. The preparation method comprises the following steps: (1) Mixing a nickel source, a cobalt source, and a manganese source in a solvent to obtain a solution A, adding oxidant and doping elements to the solution A, and stirring to obtain solution B; (2) Adding a complexing agent and nitric acid to the solution B and stirring to obtain solution C; (3) Drying the solution C to obtain aerogel D; (4) Grinding the aerogel D, and subjecting it to low-temperature pre-calcinating, and heating the aerogel to perform first calcinating to obtain precursor powder E; (5) Mixing the precursor powder E with a lithium source to obtain a mixture, and subjecting the mixture to second calcinating, grinding, and screening to obtain the doped nickel-rich ternary material. In the present disclosure, sodium persulfate is added when preparing the doped nickel-rich ternary precursor. Sodium persulfate has strong oxidizing properties, can increase the average valence state of nickel in the nickel-rich ternary precursor, and alleviate the capacity attenuation caused by the cation mixing.

## Description

### TECHNICAL FIELD

The present disclosure relates to the field of battery materials, and in particular to a doped nickel-rich ternary material and a preparation method thereof.

### BACKGROUND

Lithium ion battery materials are widely used as energy storage devices for portable electronic equipment and power vehicles due to their advantages of high energy density, long service life, low self-discharge, no memory effect, and environmental friendly. The cathode material is the most critical part of lithium ion batteries, and its cost occupies about one-third of the total cost of batteries. The lithium ion in the cathode material is the only source to maintain the normal operation of the lithium battery, so the energy density of the cathode material determines the energy density of a battery to a large extent.

At present, the widely used cathode materials for lithium ion batteries are polyanionic material LiFePO₄, layered material LiCoO₂, and layered ternary material LiNixCoyMnzO₂. Compared with other materials, ternary materials have attracted much attention because of their high energy density, high voltage platform, and high specific capacity. The content of nickel in the ternary material has a greater impact on its electrochemical performance. The higher the content of nickel, the higher the energy density and the higher the capacity. In order to meet people's needs for long-life, large-capacity lithium-ion batteries, the development of ternary materials with higher nickel content has become a research hotspot nowadays. However, nickel-rich ternary materials have many shortcomings, such as the decrease in electrochemical performance caused by cation mixing, the lower thermal stability and poor conductivity due to the higher nickel content, serious battery polarization and rapid capacity decay brought about by the unstable surface structure, material failure caused by volume effects, and electrochemical performance degradation caused by excessive surface alkali content. With the nickel content increasing in ternary materials, these problems will become more obvious, and hinder the application scale of ternary materials.

To address the shortcomings of ternary materials, a lot of research work has been carried out. Studies have shown that element doping can solve the cracking of ternary microspheres during battery charge and discharge cycles. Commonly used doping elements include Al, Zr, Mn, Nb, etc., such as manganese and aluminum disclosed in the Chinese Present disclosure Patent Application No. 202010436417.8, which are used to dope nickel-rich ternary materials and enables the nickel-rich ternary materials show good cycle stability. However, in this method, manganese/aluminum oxide is coated on the surface of the lithiated precursor of the nickel-rich ternary material, and then the target material is obtained by calcination, which cannot guarantee the uniform distribution of doping elements in the material. Chinese present disclosure patent application No. 201910186124.6 discloses an aluminum element doped NCM622 type nickel-rich ternary material and its preparation method. When preparing lithium, aluminum hydroxide and the precursor were added to the lithium salt and mixed uniformly to obtain a mixture and then the mixture was calcinated to obtain an aluminum doped NCM622 nickel-rich ternary material. The structural stability of the nickel-rich ternary material, the rate performance and cycle performance of the material were effectively improved by doping. But this preparation method uses a dry method to directly grind the aluminum salt and the precursor, hence the accuracy and uniformity of the doping cannot be guaranteed, and the doping effect is not satisfied. In addition to doping elements, alleviating the Li⁺ and Ni²⁺ mixing, that is, how to increase the average valence of nickel in the material has become a new breakthrough in improving the performance of nickel-rich ternary materials.

### SUMMARY OF THE INVENTION

The objective of the present disclosure is to provide a doped high nickel ternary material and a preparation method thereof. The doped nickel-rich ternary material prepared by the method has the advantages of high capacity and long life.

To achieve the above objective, the present disclosure adopts the following technical solutions:

A method of preparing a doped nickel-rich ternary material, comprising the following steps:
(1) Dissolving a nickel source, a cobalt source, and a manganese source in a solvent to obtain solution A, adding an oxidant and a doping element with the solution A to obtain solution B;
(2) Adding a complexing agent and nitric acid to the solution B to obtain solution C;
(3) Drying the solution C to obtain an aerogel compound, and grinding the compound to obtain aerogel D;
(4) Subjecting the aerogel D to a first calcinating, and followed by a second calcinating to obtain precursor powder E;
(5) Mixing the precursor powder E with a lithium source to obtain a mixture, subjecting the mixture to calcinating, grinding and screening to obtain a doped nickel-rich ternary material; the doping element is at least one selected from the group consisting of Zr, Nb, Al, F, Mn, and La.

In some embodiments, in step (1), the nickel source is nickel nitrate hexahydrate, the cobalt source is cobalt nitrate hexahydrate, and the manganese source is manganese acetate tetrahydrate.

In some embodiments, in step (1), the molar ratio of the nickel source, the cobalt source and the manganese source is (0.6-0.9) :(0.05-0.2): (0.05-0.2).

In some other embodiments, in step (1), the molar ratio of the nickel source, the cobalt source and the manganese source is 0.8 :0.1: 0.1 or 0.6:0.2:0.2.

In some embodiments, in step (1), the solvent is water.

In some embodiments, in step (1), total concentration of the metal ions in the solution A is 1-1.5 mol/L.

In some embodiments, in step (1), the oxidant is at least one selected from the group consisting of sodium persulfate, sodium peroxide and ammonium persulfate.

In some embodiments, in step (1), the doping element is mixed with the solution A in the form of nitrate, phosphate or sulfate.

In some embodiments, in step (1), the total content of the doping elements in the solution B is 0.01-0.05 mol/L.

In some embodiments, in step (2), the complexing agent is an acrylic acid solution.

In some embodiments, in step (2), the volume of the complexing agent mixed is 50-150 mL.

In some embodiments, in step (2), the volume of the nitric acid mixed is 5-15 mL

In some embodiments, in step (3), the drying temperature is 120°C-180°C, and the time for the drying is 4-8 h.

In some embodiments, in step (4), the first calcinating is carried out at a temperature of 150°C-250°Cand the time for the first calcinating is 1-3 h;

In some embodiments, in step (4), the first calcinating is carried out in air or oxygen atmosphere, and the oxygen flow rate is 0.2-0.4 mL/min.

In some embodiments, in step (4), the second calcinating is carried out at a temperature of 400°C-600°C, and the time for the second calcinating is 4-8 h.

In some embodiments, in step (4), the second calcinating is carried out in air or oxygen atmosphere.

In some embodiments, in step (5), the lithium source is lithium carbonate or lithium hydroxide.

In some embodiments, in step (5), the amount of the lithium in the lithium source is 0.2-0.25 mol.

In some embodiments, in step (5), the calcinating is carried out at a temperature of 600°C-900°C, and the time for the calcinating is 8-16 h.

In some embodiments, in step (5), the calcinating is carried out in an oxygen atmosphere, and the oxygen flow rate is 0.2-0.4 mL/min.

In some embodiments, in step (5), the screening is carried out with a sieve of 325-400 meshes.

### Principle:

In the above preparation method, a nickel-rich ternary material precursor is firstly synthesized by the thermal polymerization of acrylic acid. In this process, sodium persulfate (oxidant) and doping elements are added to obtain a product that is filtered, dried and ground and then placed in a tube furnace, in which low-temperature and high-temperature calcinating are carried out, and oxygen is slowly introduced into the calcinating process. After the calcinating, the doped nickel-rich ternary precursor is ground and mixed with a lithium source to obtain a mixture, and the mixture is subjected to a high-temperature solid phase process to obtain the doped nickel-rich ternary material. The addition of sodium persulfate (oxidant) and the adoption of the low-temperature pre-oxidation process increase the average valence of nickel in the ternary precursor, reduce the positive divalent nickel ions, and eliminate crystal defects of ternary materials, leading to the lowered cation mixing degree and improvement of the cycle stability of the material. The second calcinating can effectively lower the alkali content on the surface of the material, prevent the polarization reaction of the battery, and improve the conductivity and cycle life of the material. The addition of the doping elements improves the thermal stability of the material, suppresses the capacity attenuation during the cycle, and improves the cycle stability and cycle life of the material. The doped nickel-rich ternary material synthesized by this method has the advantages of high capacity and long life.

A doped nickel-rich ternary material prepared by the above method, wherein the doped nickel-rich ternary material has a chemical formula of LiNiₓCo_{y}Mn_{z}MiO₂, wherein 0.6≤x≤0.9, 0.05≤y≤0.2, 0.05≤z≤0.2, 0.00001≤i<0.1, x+y+z+i=1, said M is at least one selected from the group consisting of Zr, Nb, Al, F, Mn, and La.

In some embodiments, the doped nickel-rich ternary material has a first reversible capacity of 181-193 mAh/g at 0.2 C current.

A lithium battery comprising the doped nickel-rich ternary material.

### Beneficial effects

(1) In the embodiments of the present disclosure, sodium persulfate is added when preparing the doped nickel-rich ternary precursor. Sodium persulfate has strong oxidizing properties, which can increase the average valence of nickel in the nickel-rich ternary precursor and alleviate the capacity attenuation caused by cation mixing.
(2) The embodiments of the present disclosure adopt two calcinating processes when preparing the doped nickel-rich ternary precursor, first low-temperature pre-calcinating and then high-temperature calcinating. This method can effectively reduce the alkali content on the surface of the material and increase the conductivity of the material, prevent the battery polarization, thereby improving the conductivity and cycle life of the material.
(3) The embodiments of the present disclosure involve addition of doping elements when preparing the doped nickel-rich ternary precursor. The addition of doping elements can effectively improve the thermal stability of the nickel-rich ternary material, thereby improving the safety performance and cycle life of the material.
(4) The nickel-rich ternary material prepared by the embodiments of the present disclosure is prepared by sodium sulfate (oxidant) and a doped nickel-rich ternary precursor that has been calcinated twice. The doped nickel-rich ternary material prepared by this method also exhibits high specific capacity and long cycle life at high temperatures, in addition to high specific capacity and long cycle life.

### BRIEF DESCRIPTION OF DRAWINGS

FIG. 1 is a graph of the cycle performance of the materials prepared in Example 1 and Comparative Example 1 of the present disclosure at a current density of 0.2 C;
FIG. 2 is the SEM image of the doped nickel-rich ternary material prepared in Example 1 of the present disclosure.

### DETAILED DESCRIPTION OF THE ILLUSTRATED EXAMPLES

In order to fully understand the present disclosure, the preferred experimental scheme of the present disclosure will be described below in conjunction with examples to further illustrate the characteristics and advantages of the present disclosure. Any change or alteration that does not deviate from the gist of the present disclosure can be understood by those skilled in the art. The scope of protection of the present disclosure is determined by the scope of the claims.

Where specific conditions are not indicated in the embodiments of the present disclosure, it shall be carried out under the conventional conditions or the conditions recommended by the manufacturer. The raw materials, reagents, etc. used without indicating their manufacturers are all conventional products commercially available.

### Example 1

A method of preparing a doped nickel-rich ternary material, comprising the following steps:
(1) Preparing a solution of nickel nitrate, cobalt nitrate and manganese acetate with a molar ratio of Ni:Co:Mn=0.8:0.1:0.1 and a total concentration of 1 mol/L; Dissolving the above-mentioned salt solution in 200 mL deionized water and stirring until the salt solution is completely dissolved to obtain solution A; preparing a solution of sodium persulfate with a concentration of 0.1 mol/L, a solution of lanthanum nitrate and a solution of niobium oxide phosphate, both with a concentration of 0.015 mol/L, adding above solutions to the solution A and stirring well to obtain solution B;
(2) Adding 100 mL aqueous ammonia and 10 mL nitric acid to the solution B, mixing the resulting solution well to obtain solution C;
(3) Placing the solution C in an oven at 140°C for 6 h to obtain aerogel D;
(4) Fully grinding the aerogel D, followed by keeping the aerogel at 200°C for 2 h in an oxygen atmosphere, and then heating the aerogel up to 500°C and keeping it at this temperature for 6h to obtain the doped nickel-rich ternary precursor;
(5) Fully grinding and mixing the doped nickel-rich ternary precursor with a lithium source to obtain a mixture, and the stoichiometric ratio of the lithium content in the lithium source to the total metal ion content in the solution A prepared in step (1) is 1.06:1 (the amount of the lithium ions in the source is 0.2-0.25 mol). Placing the mixture at a temperature of 750°C in an oxygen atmosphere for 12 h, followed by annealing, grinding and screening the resulting product with a 325 mesh sieve to obtain the doped nickel-rich ternary material.

A doped nickel-rich ternary material has a chemical formula LiNi_{0.797}Co_{0.1}Mn_{0.1}NbLa_{0.003}O₂. Its first reversible capacity reached 193 mAh/g at the current of 0.2 C.

During the first charge and discharge process, part of the active lithium participates in the construction of the SEI film, and cannot be released and returned to the positive electrode. An irreversible phase change occurs during the first delithiation process. After the first delithiation, the dynamic properties of the material decrease.

The doped nickel-rich ternary material prepared above has excellent electrochemical performance as a lithium ion battery cathode material. The first reversible capacity reached 193 mAh/g at a current of 0.2 C. The reversible capacity after 300 charge-discharge cycles was still 180 mAh/g, and the reversible capacity remained 161 mAh/g after 200 charge-discharge cycles at a current of 5 C. The cycling performance test of the battery was carried out at 70°C, and the reversible capacity was still 173 mAh/g after 200 charge-discharge cycles at a current of 0.1 C.

### Example 2

A method of preparing a doped nickel-rich ternary material, comprising the following steps:
(1) Preparing a solution of nickel nitrate, cobalt nitrate and manganese acetate with a molar ratio of Ni:Co:Mn=0.8:0.1:0.1 and a total concentration of 1 mol/L; Dissolving the above-mentioned salt solution in 200 mL deionized water and stirring until the salt solution is completely dissolved to obtain solution A; preparing a solution of sodium persulfate with a concentration of 0.1 mol/L, a solution of lanthanum nitrate and a solution of niobium oxide phosphate, both with a concentration of 0.015 mol/L, adding above solutions to solution A and stirring well to obtain solution B;
(2) Adding 100 mL aqueous ammonia and 10 mL nitric acid to the solution B, mixing the resulting solution well to obtain solution C;
(3) Placing the solution C in an oven at 140°C for 6 h to obtain aerogel D;
(4) Fully grinding the aerogel D, followed by keeping the aerogel at 200°C for 2 h in an oxygen atmosphere, and then heating the aerogel up to 500°C and keeping it at this temperature for 6 h to obtain the doped nickel-rich ternary precursor;
(5) Fully grinding and mixing the doped nickel-rich ternary precursor with a lithium source to obtain a mixture, and the stoichiometric ratio of the lithium content in the lithium source to the total metal ion content in the solution A prepared in step (1) is 1.06:1. Placing the mixture at a temperature of 750 °C in an oxygen atmosphere for 12 h, followed by annealing, grinding and screening the resulting product with a 325 mesh sieve to obtain the doped nickel-rich ternary material.

A doped nickel-rich ternary material has a chemical formula LiNi_{0.797}Co_{0.1}Mn_{0.1}NbLa_{0.003}O₂. Its first reversible capacity reached 184mAh/g at the current of 0.2 C.

The doped nickel-rich ternary material prepared above has excellent electrochemical performance as a lithium ion battery cathode material. The reversible capacity after 300 charge-discharge cycles at a current of 0.2 C was still 166 mAh/g, and remained 146 mAh/g after 200 charge-discharge cycles at a current of 5 C. The cycling performance test of the battery was carried out at 70°C, and the reversible capacity was still 163 mAh/g after 200 charge-discharge cycles at a current of 0.1 C.

### Example 3

A method of preparing a doped nickel-rich ternary material, comprising the following steps:
(1) Preparing a solution of nickel nitrate, cobalt nitrate and manganese acetate with a molar ratio of Ni:Co:Mn=0.8:0.1:0.1 and a total concentration of 1 mol/L; Dissolving the above-mentioned salt solution in 200 mL deionized water and stirring until the salt solution is completely dissolved to obtain solution A; preparing a solution of sodium persulfate with a concentration of 0.15 mol/L, a solution of lanthanum nitrate and a solution of niobium oxide phosphate, both with a concentration of 0.015 mol/L, adding above solutions to solution A and stirring well to obtain solution B;
(2) Adding 100 mL aqueous ammonia and 10 mL nitric acid to the solution B, mixing the resulting solution well to obtain solution C;
(3) Placing the solution C in an oven at 140°C for 6 h to obtain aerogel D;
(4) Fully grinding the aerogel D, followed by keeping the aerogel at 200°C for 2 h in an oxygen atmosphere, and then heating the aerogel up to 500°C and keeping it at this temperature for 8h to obtain the doped nickel-rich ternary precursor;
(5) Fully grinding and mixing the doped nickel-rich ternary precursor with a lithium source to obtain a mixture, and the stoichiometric ratio of the lithium content in the lithium source to the total metal ion content in the solution A prepared in step (1) is 1.06:1. Placing the mixture at a temperature of 750°C in an oxygen atmosphere for 12 h, followed by annealing, grinding and screening the resulting product with a 325 mesh sieve to obtain the doped nickel-rich ternary material.

A doped nickel-rich ternary material has a chemical formula LiNi_{0.797}Co_{0.1}Mn_{0.1}NbLa_{0.003}O₂. Its first reversible capacity reached 186mAh/g at the current of 0.2 C.

The doped nickel-rich ternary material prepared above has excellent electrochemical performance as a lithium ion battery cathode material. The reversible capacity after 300 charge-discharge cycles at a current of 0.2 C was still 170 mAh/g, and remained 128 mAh/g after 200 charge-discharge cycles at a current of 5 C. The cycling performance test of the battery was carried out at 70°C, and the reversible capacity was still 158 mAh/g after 200 charge-discharge cycles at a current of 0.1 C.

### Example 4

A method of preparing a doped nickel-rich ternary material, comprising the following steps:
(1) Preparing a solution of nickel nitrate, cobalt nitrate and manganese acetate with a molar ratio of Ni:Co:Mn=0.8:0.1:0.1 and a total concentration of 1 mol/L; Dissolving the above-mentioned salt solution in 200 mL deionized water and stirring until the salt solution is completely dissolved to obtain solution A; preparing a solution of sodium persulfate with a concentration of 0.1 mol/L, a solution of lanthanum nitrate and a solution of niobium oxide phosphate, both with a concentration of 0.05 mol/L, adding above solutions to solution A and stirring well to obtain solution B;
(2) Adding 100 mL aqueous ammonia and 10 mL nitric acid to the solution B, mixing the resulting solution well to obtain solution C;
(3) Placing the solution C in an oven at 140°C for 6 h to obtain aerogel D;
(4) Fully grinding the aerogel D, followed by keeping the aerogel at 200°C for 2 h in an oxygen atmosphere, and then heating the aerogel up to 500°C and keeping it at this temperature for 4 h to obtain the doped nickel-rich ternary precursor;
(5) Fully grinding and mixing the doped nickel-rich ternary precursor with a lithium source to obtain a mixture, and the stoichiometric ratio of the lithium content in the lithium source to the total metal ion content in the solution A prepared in step (1) is 1.06:1. Placing the mixture at a temperature of 750°C in an oxygen atmosphere for 12 h, followed by annealing, grinding and screening the resulting product with a 325 mesh sieve to obtain the doped nickel-rich ternary material.

A doped nickel-rich ternary material has a chemical formula of LiNi_{0.799}Co_{0.1}Mn_{0.1}NbLa_{0.001}O₂. Its first reversible capacity reached 183 mAh/g at the current of 0.2 C.

The doped nickel-rich ternary material prepared above has excellent electrochemical performance as a lithium ion battery cathode material. The reversible capacity after 300 charge-discharge cycles at a current of 0.2 C was still 165 mAh/g, and remained 133 mAh/g after 200 charge-discharge cycles at a current of 5 C. The cycling performance test of the battery was carried out at 70°C, and the reversible capacity was still 133 mAh/g after 200 charge-discharge cycles at a current of 0.1 C.

### Example 5

A method of preparing a doped nickel-rich ternary material, comprising the following steps:
(1) Preparing a solution of nickel nitrate, cobalt nitrate and manganese acetate with a molar ratio of Ni:Co:Mn=0.8:0.1:0.1 and a total concentration of 1 mol/L; Dissolving the above-mentioned salt solution in 200 mL deionized water and stirring until the salt solution is completely dissolved to obtain solution A; preparing a solution of sodium persulfate with a concentration of 0.1 mol/L, a solution of lanthanum nitrate and a solution of niobium oxide phosphate, both with a concentration of 0.005 mol/L, adding above solutions to solution A and stirring well to obtain solution B;
(2) Adding 100 mL aqueous ammonia and 10 mL nitric acid to the solution B, mixing the resulting solution well to obtain solution C;
(3) Placing the solution C in an oven at 140°C for 6 h to obtain aerogel D;
(4) Fully grinding the aerogel D, followed by keeping the aerogel at 250°C for 2 h in an oxygen atmosphere, and then heating the aerogel up to 500°C and keeping it at this temperature for 6 h to obtain the doped nickel-rich ternary precursor;
(5) Fully grinding and mixing the doped nickel-rich ternary precursor with a lithium source to obtain a mixture, and the stoichiometric ratio of the lithium content in the lithium source to the total metal ion content in the solution A prepared in step (1) is 1.06:1. Placing the mixture at a temperature of 700°C in an oxygen atmosphere for 12 h, followed by annealing, grinding and screening the resulting product with a 325 mesh sieve to obtain the doped nickel-rich ternary material.

A doped nickel-rich ternary material has a chemical formula of LiNi_{0.799}Co_{0.1}Mn_{0.1}NbLa_{0.001}O₂. Its first reversible capacity reached 181 mAh/g at the current of 0.2 C.

The doped nickel-rich ternary material prepared above has excellent electrochemical performance as a lithium ion battery cathode material. The reversible capacity after 300 charge-discharge cycles at a current of 0.2 C was still 164 mAh/g, and remained 139 mAh/g after 200 charge-discharge cycles at a current of 5C. The cycling performance test of the battery was carried out at 70°C, and the reversible capacity was still 142 mAh/g after 200 charge-discharge cycles at a current of 0.1 C.

### Example 6

A method of preparing a doped nickel-rich ternary material, comprising the following steps:
(1) Preparing a solution of nickel nitrate, cobalt nitrate and manganese acetate with a molar ratio of Ni:Co:Mn=0.8:0.1:0.1 and a total concentration of 1 mol/L; Dissolving the above-mentioned salt solution in 200 mL deionized water and stirring until the salt solution is completely dissolved to obtain solution A; preparing a solution of sodium persulfate with a concentration of 0.1 mol/L, a solution of lanthanum nitrate and a solution of niobium oxide phosphate, both with a concentration of 0.015 mol/L, adding above solutions to solution A and stirring well to obtain solution B;
(2) Adding 100 mL aqueous ammonia and 10mL nitric acid to the solution B, mixing the resulting solution well to obtain solution C;
(3) Placing the solution C in an oven at 120°C for 4 h to obtain aerogel D;
(4) Fully grinding the aerogel D, followed by keeping the aerogel at 150°C for 2 h in an oxygen atmosphere, and then heating the aerogel up to 400°C and keeping it at this temperature for 6 h to obtain the doped nickel-rich ternary precursor;
(5) Fully grinding and mixing the doped nickel-rich ternary precursor with a lithium source to obtain a mixture, and the stoichiometric ratio of the lithium content in the lithium source to the total metal ion content in the solution A prepared in step (1) is 1.06:1. Placing the mixture at a temperature of 600°C in an oxygen atmosphere for 8 h, followed by annealing, grinding and screening the resulting product with a 325 mesh sieve to obtain the doped nickel-rich ternary material.

A doped nickel-rich ternary material has a chemical formula of LiNi_{0.797}Co_{0.1}Mn_{0.1}NbLa_{0.003}O₂. Its first reversible capacity reached 182 mAh/g at the current of 0.2 C.

The doped nickel-rich ternary material prepared above has excellent electrochemical performance as a lithium ion battery cathode material. The reversible capacity after 300 charge-discharge cycles at a current of 0.2 C was still 159 mAh/g, and remained 135 mAh/g after 200 charge-discharge cycles at a current of 5 C. The cycling performance test of the battery was carried out at 70°C, and the reversible capacity was 123 mAh/g after 200 charge-discharge cycles at a current of 0.1 C.

### Example 7

A method of preparing a doped nickel-rich ternary material, comprising the following steps:
(1) Preparing a solution of nickel nitrate, cobalt nitrate and manganese acetate with a molar ratio of Ni:Co:Mn=0.8:0.1:0.1 and a total concentration of 1 mol/L; Dissolving the above-mentioned salt solution in 200 mL deionized water and stirring until the salt solution is completely dissolved to obtain solution A; preparing a solution of sodium persulfate with a concentration of 0.1 mol/L, a solution of lanthanum nitrate and a solution of niobium oxide phosphate, both with a concentration of 0.015 mol/L, adding above solutions to solution A and stirring well to obtain solution B;
(2) Adding 100 mL aqueous ammonia and 10 mL nitric acid to the solution B, mixing the resulting solution well to obtain solution C;
(3) Placing the solution C in an oven at 180°C for 8 h to obtain aerogel D;
(4) Fully grinding the aerogel D, followed by keeping the aerogel at 250°C for 3 h in an oxygen atmosphere, and then heating the aerogel up to 600°C and keeping it at this temperature for 8 h to obtain the doped nickel-rich ternary precursor;
(5) Fully grinding and mixing the doped nickel-rich ternary precursor with a lithium source to obtain a mixture, and the stoichiometric ratio of the lithium content in the lithium source to the total metal ion content in the solution A prepared in step (1) is 1.06:1. Placing the mixture at a temperature of 900°C in an oxygen atmosphere for 16 h, followed by annealing, grinding and screening the resulting product with a 325 mesh sieve to obtain the doped nickel-rich ternary material.

A doped nickel-rich ternary material has a chemical formula of LiNi_{0.797}Co_{0.1}Mn_{0.1}NbLa_{0.003}O₂. Its first reversible capacity reached 187 mAh/g at the current of 0.2 C.

The doped nickel-rich ternary material prepared above has excellent electrochemical performance as a lithium ion battery cathode material. The reversible capacity after 300 charge-discharge cycles at a current of 0.2 C was still 168mAh/g, and remained 135 mAh/g after 200 charge-discharge cycles at a current of 5 C. The cycling performance test of the battery was carried out at 70°C, and the reversible capacity was 133 mAh/g after 200 charge-discharge cycles at a current of 0.1 C.

### Comparative Example 1 (without doping elements)

A method of preparing a nickel-rich ternary material, comprising the following steps:
(1) Preparing a solution of nickel nitrate, cobalt nitrate and manganese acetate with a molar ratio of Ni:Co:Mn=0.8:0.1:0.1 and a total concentration of 1 mol/L; Dissolving the above-mentioned salt solution in 200 mL deionized water and stirring until the salt solution is completely dissolved to obtain solution A; preparing a solution of sodium persulfate with a concentration of 0.1 mol/L, mixing the solution with 100 mL aqueous ammonia and the solution A and stirring well to obtain solution B;
(2) Placing the solution B in an oven at 140°C for 6 h to obtain aerogel C;
(3) Fully grinding the aerogel C, followed by keeping the aerogel at 500°C for 6h in an oxygen atmosphere to obtain a nickel-rich ternary precursor;
(4) Fully grinding and mixing the nickel-rich ternary precursor with a lithium source to obtain a mixture, and the stoichiometric ratio of the lithium content in the lithium source to the total metal ion content in the solution A prepared in step (1) is 1.06:1. Placing the mixture at a temperature of 700°C in an oxygen atmosphere for 12 h, followed by annealing, grinding and screening the resulting product with a 325 mesh sieve to obtain the nickel-rich ternary material.

A nickel-rich ternary material has a chemical formula of LiNi_{0.8}Co_{0.1}Mn_{0.1}O₂. Its first reversible capacity reached 162 mAh/g at the current of 0.2 C.

The nickel-rich ternary material prepared by comparative example 1 was used as a lithium ion battery cathode material. The reversible capacity after 100 charge-discharge cycles at a current of 0.2 C was 83 mAh/g, and remained 60 mAh/g after 100 charge-discharge cycles at a current of 5 C. The cycling performance test of the battery was carried out at 70°C, and the reversible capacity was 68 mAh/g after 100 charge-discharge cycles at a current of 0.1 C.

### Comparative Example 2 (without acrylic acid)

A method of preparing a nickel-rich ternary material, comprising the following steps:
(1) Preparing a solution of nickel nitrate, cobalt nitrate and manganese acetate with a molar ratio of Ni:Co:Mn=0.8:0.1:0.1 and a total concentration of 1 mol/L; Dissolving the above-mentioned salt solution in 200 mL deionized water and stirring until the salt solution is completely dissolved to obtain solution A; preparing a solution of lanthanum nitrate and a solution of niobium oxide phosphate, both with a concentration of 0.015 mol/L, adding above solutions to the solution A and stirring well to obtain solution B;
(2) Placing the solution B in an oven at 140°C for 6 h to obtain aerogel C;
(3) Fully grinding the aerogel C, followed by keeping the aerogel at 500°C for 6 h in an oxygen atmosphere to obtain the doped nickel-rich ternary precursor;
(4) Fully grinding and mixing the doped nickel-rich ternary precursor with the lithium source to obtain a mixture, and the stoichiometric ratio of the lithium content in the lithium source to the total metal ion content in the solution A prepared in step (1) is 1.06:1. Placing the mixture at a temperature of 700°C in an oxygen atmosphere for 12 h, followed by annealing, grinding and screening the resulting product with a 325 mesh sieve to obtain the doped nickel-rich ternary material.

A doped nickel-rich ternary material has a chemical formula of LiNi_{0.797}Co_{0.1}Mn_{0.1}NbLa_{0.003}O₂. Its first reversible capacity reached 158 mAh/g at a current of 0.2 C.

The nickel-rich ternary material prepared by comparative example 2 was used as a lithium ion battery cathode material. The reversible capacity after 100 charge-discharge cycles at a current of 0.2 C was 95 mAh/g, and remained 63 mAh/g after 100 charge-discharge cycles at a current of 5 C. The cycling performance test of the battery was carried out at 70°C, and the reversible capacity was 78 mAh/g after 100 charge-discharge cycles at a current of 0.1 C.

### Comparative Example 3 (without doping elements or acrylic aid)

A method of preparing a nickel-rich ternary material, comprising the following steps:
(1) Preparing a solution of nickel nitrate, cobalt nitrate and manganese acetate with a molar ratio of Ni:Co:Mn=0.8:0.1:0.1 and a total concentration of 1 mol/L; Dissolving the above-mentioned salt solution in 200 mL deionized water and stirring until the salt solution is completely dissolved to obtain solution A;
(2) Placing the solution A in an oven at 140°C for 6 h to obtain aerogel B;
(3) Fully grinding the aerogel B, followed by keeping the aerogel at 200°C for 2 h, and then heating the aerogel to 500°C and hold it at this temperature for 6h in an oxygen atmosphere to obtain the nickel-rich ternary precursor;
(4) Fully grinding and mixing the nickel-rich ternary precursor with a lithium source to obtain a mixture, and the stoichiometric ratio of the lithium content in the lithium source to the total metal ion content in the solution A prepared in step (1) is 1.06:1. Placing the mixture at a temperature of 700°C in an oxygen atmosphere for 12 h, followed by annealing, grinding and screening the resulting product with a 325 mesh sieve to obtain the doped nickel-rich ternary material.

A doped nickel-rich ternary material has a chemical formula of LiNi_{0.8}Co_{0.1}Mn_{0.1}O₂. Its first reversible capacity reached 152 mAh/g at a current of 0.2 C.

The nickel-rich ternary material prepared by comparative example 3 was used as a lithium ion battery cathode material. The reversible capacity after 100 charge-discharge cycles at a current of 0.2 C was 89 mAh/g, and remained 69 mAh/g after 100 charge-discharge cycles at a current of 5 C. The cycling performance test of the battery was carried out at 70°C, and the reversible capacity was 73 mAh/g after 100 charge-discharge cycles at a current of 0.1 C.

Comparing the preparation conditions and test results of the materials prepared in the examples and comparative examples, the results shown in Table 1 are obtained.

**Table 1 Comparison of the cycle performance of the materials prepared in Examples 1-7 and Comparative Examples 1-3**

| Item | Cycle performance/0.2C Specific capacity/ First | Cycle perform ance/0.2C Specific capacity/ cycles | Cycle perform ance/5C Specific capacity/ cycles | Cycle performance under high temperature /70°C/0.1C | Cycle performance/ 0.2C/rate/ cycles |
|---|---|---|---|---|---|
| Example 1 | 193 mAhg⁻¹ | 181 mAhg⁻¹ /300th | 161 mAhg⁻¹ /200th | 173 mAhg⁻¹ /200th | 88.29% |
| Example 2 | 184 mAhg⁻¹ | 166 mAhg⁻¹ /300th | 146 mAhg⁻¹ /200th | 163 mAhg⁻¹ /200th | 82.59% |
| Example 3 | 186 mAhg⁻¹ | 170 mAhg⁻¹ /300th | 128 mAhg⁻¹ /200th | 158 mAhg⁻¹ /200th | 86.73% |
| Example 4 | 183 mAhg⁻¹ | 165 mAhg⁻¹ /300th | 133 mAhg⁻¹ /200th | 133 mAhg⁻¹ /200th | 90.16% |
| Example 5 | 181 mAhg⁻¹ | 164 mAhg⁻¹ /300th | 139 mAhg⁻¹ /200th | 142 mAhg⁻¹ /200th | 83.2% |
| Example 6 | 182 mAhg⁻¹ | 159 mAhg⁻¹ /300th | 135 mAhg⁻¹ /200th | 123 mAhg⁻¹ /300th | 87.36% |
| Example 7 | 187 mAhg⁻¹ | 168 mAhg⁻¹ /300th | 135 mAhg⁻¹ /200th | 133 mAhg⁻¹ /200th | 88.40% |
| Comparative Example 1 | 162 mAhg⁻¹ | 83 mAhg⁻¹ /100th | 60 mAhg⁻¹ /100th | 68 mAhg⁻¹ /100th | 51.23% |
| Comparative Example 2 | 158 mAhg⁻¹ | 95 mAhg⁻¹ /100th | 63 mAhg⁻¹ /100th | 78 mAhg⁻¹ 1100th | 0.6% |
| Comparative Example 3 | 152 mAhg⁻¹ | 89 mAhg⁻¹ /100th | 69 mAhg⁻¹ /100th | 73 mAhg⁻¹ /100th | 58.55% |

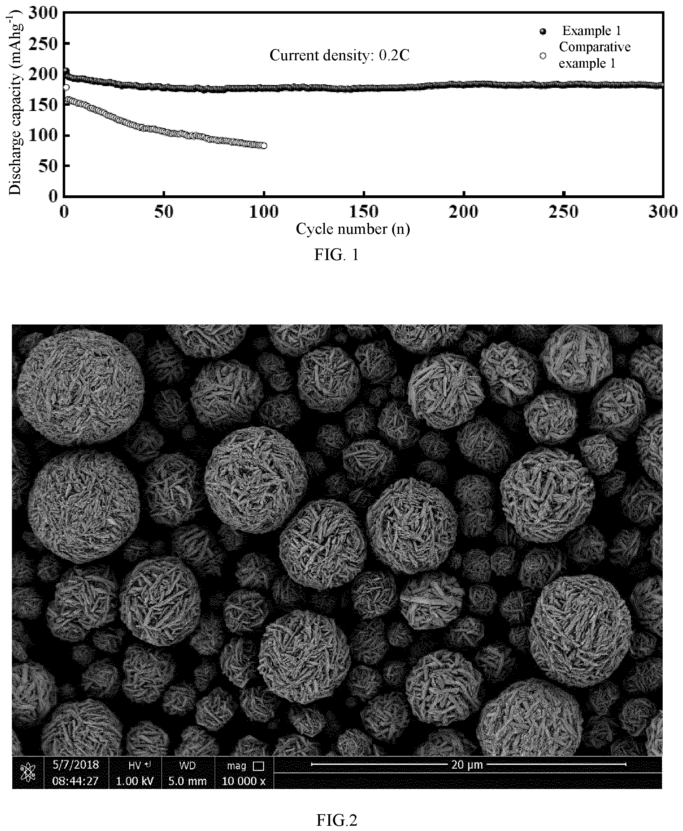

It can be seen from Table 1 and Figure 1 that the method of elements doping in presence of oxidant and adoption of second calcinating can effectively improve the electrochemical performance of the material. The material prepared by this method exhibits a high specific capacity and a long and stable cycle. It can be seen from Figure 2 that the material particles prepared by this method are uniform and have a regular spherical shape.

In the above, a coated nickel-rich ternary material provided by the present disclosure and its preparation method and application have been introduced in detail. Specific examples are used to illustrate the principle and implementation of the present disclosure. The description of the above examples is only used to help understand the method and core idea of the present disclosure, including the best mode, and also enables any skilled in the art to practice the present disclosure, including manufacturing and using any device or system, and implementing any combined method. It should be pointed out that for those of ordinary skill in the art, without departing from the principle of the present disclosure, several improvements and modifications can be made to the present disclosure, and these improvements and modifications also fall within the protection scope of the claims of the present disclosure. The scope of patent protection of the present disclosure is defined by the claims, and may include other embodiments that those skilled in the art can think of. If these other embodiments have structural elements that are not different from the literal expression of the claims, or if they include equivalent structural elements that are not substantially different from the literal expression of the claims, these other embodiments should also be included in the scope of the claims.

## Claims

1. A method of preparing a doped nickel-rich ternary material, comprising the following steps:
(1) dissolving a nickel source, a cobalt source, and a manganese source in a solvent to obtain solution A, adding an oxidant and a doping element to the solution A to obtain solution B;
(2) adding a complexing agent and nitric acid to the solution B to obtain solution C;
(3) drying the solution C to obtain an aerogel compound, and grinding the aerogel compound to obtain aerogel D;
(4) subjecting the aerogel D to a first calcinating, followed by a second calcinating to obtain a precursor powder E;
(5) mixing the precursor powder E with a lithium source to obtain a mixture, subjecting the mixture to calcinating, grinding and screening to obtain the doped nickel-rich ternary material; wherein the doping element is at least one selected from the group consisting of Zr, Nb, Al, F, Mn, and La.

2. The method according to claim 1, wherein in step (1), the nickel source is nickel nitrate hexahydrate, the cobalt source is cobalt nitrate hexahydrate, and the manganese source is manganese acetate tetrahydrate; a molar ratio of the nickel source to the cobalt source to the manganese source is (0.6-0.9) :(0.05-0.2): (0.05-0.2).

3. The method according to claim 1, wherein in step (1), the oxidizing agent is at least one selected from the group consisting of sodium persulfate, sodium peroxide, and ammonium persulfate.

4. The method according to claim 1, wherein in step (1), the doping element being added to the solution A is in the form of a nitrate, a phosphate, or a sulfate.

5. The method according to claim 1, wherein in step (2), the complexing agent is an acrylic acid solution.

6. The method according to claim 1, wherein in step (4), the first calcinating is carried out at a temperature of 150°C-250°C for 1-3 h in air or an oxygen atmosphere; the second calcinating is carried out at a temperature of 400°C-600°C for 4-8 h in air or an oxygen atmosphere.

7. The method according to claim 1, wherein in step (5), the lithium source is lithium carbonate or lithium hydroxide.

8. A doped nickel-rich ternary material prepared by the method of any one of claims 1-7, wherein the doped nickel-rich ternary material has a chemical formula of LiNiₓCo_{y}Mn_{z}MᵢO₂, M is at least one selected from the group consisting of Zr, Nb, Al, F, Mn, and La, wherein 0.6≤x≤0.9, 0.05≤y≤0.2, 0.05≤z≤0.2, 0.00001≤i<0.1, x+y+z+i=1.

9. The doped nickel-rich ternary material according to claim 8, wherein the doped nickel-rich ternary material has a first reversible capacity of 181-193 mAh/g.

10. A lithium battery comprising the doped nickel-rich ternary material according to any one of claims 8-9.
